# EUROPÄISCHE PATENTSCHRIFT

(11) **EP 3 693 500 B1**
(45) Veröffentlichungstag und Bekanntmachung des Hinweises auf die Patenterteilung: **25.03.2026**
(21) Anmeldenummer: 19000390.5
(22) Anmeldetag: 28.08.2019
(51) Int. Cl.: D04H 13/00, D01D 5/08, B32B 5/02, D04H 1/559, B32B 27/12

(54) **VERFAHREN ZUR HERSTELLUNG EINES MEHRSCHICHTMATERIALS**
METHOD FOR PRODUCING A MULTILAYER MATERIAL
PROCÉDÉ DE FABRICATION D'UN MATÉRIAU MULTICOUCHE

(30) Priorität: 08.02.2019 DE 102019000904
(43) Veröffentlichungstag der Anmeldung: 12.08.2020
(73) Patentinhaber: Innovatec Microfibre Technology GmbH & Co. KG, 53840 Troisdorf (DE)
(72) Erfinder: Krumme, Daniel, 42781 Haan (DE)
(74) Vertreter: Patentanwaltskanzlei Methling

(56) Entgegenhaltungen:
- EP-A1- 1 712 351
- WO-A1-99/25551
- CN-U- 206 214 906
- DE-A1- 102008 005 466

## Beschreibung

Die Erfindung betrifft ein Verfahren zur Herstellung eines Mehrschichtmaterials mit zumindest zwei Schichten, die nacheinander jeweils mittels zumindest eines Düsenblocks nach dem Schmelzblasverfahren kontinuierlich hergestellt werden, indem mittels eines ersten Düsenblocks eine erste Schicht aus einem Schmelzblasvlies hergestellt und mittels einer Fördereinrichtung kontinuierlich abtransportiert wird, wobei die zweite Schicht mittels zumindest eines in Transportrichtung der Fördereinrichtung hinter dem ersten Düsenblock angeordneten zweiten Düsenblocks nach dem Schmelzblasverfahren unmittelbar auf die erste Schicht aufgebracht wird.

Ferner betrifft die Erfindung ein nach einem solchen Verfahren hergestelltes Mehrschichtmaterial.

Aus der EP 1 712 351 A1 ist ein Verfahren zur Herstellung eines Mehrschichtmaterials bekannt, bei dem zunächst von einer Rolle ein Stapelfaservlies als Trägervlies abgerollt wird. Nach dem Schmelzblasverfahren wird auf das Trägervlies ein Propylen-Ethylen-Copolymergemisch aufgebracht. Es handelt sich bei diesem Material um ein elastisches Copolymer mit niedrigem Schmelzpunkt. Bei dem Prozess ist darauf zu achten, dass die aus der Spinndüse austretenden Fasern noch in Form einer Schmelze auf das Trägervlies auftreffen. Dadurch dringt das Propylen-Ethylen-Copolymer tief in die Trägerschicht ein. Gleichzeitig werden die Fasern des Trägervlieses ummantelt. Das Ergebnis dieses Prozesses ist ein dehnfähiger, elastischer Verbundvliesstoff, bei dem die Außenlagen einen textilen Griff aufweisen, sich die einzelnen Lagen aber nicht mehr voneinander trennen lassen und bei dem die Lagen ohne Vermittlung eines Klebstoffes oder anderer Maßnahmen unauflöslich miteinander verbunden sind.

Aus der DE 10 2008 005 466 A1 ist Verfahren zur Herstellung eines Mehrschichtmaterials bekannt, bei dem das Vlies als Laminat hergestellt wird mit zumindest einer weiteren Lage. Diese Lage kann ebenfalls ein Vlies sein. Es kann jedoch ebenfalls ein Film genutzt werden. Die Lagen können miteinander thermisch bondiert, verklebt oder durch sonstige geeignete Mittel miteinander verbunden sein.

Aus der WO 99/25551 A1 ist ein Mehrschichtmaterial bekannt, welches aus einer Kernbahn aus synthetischen Stapelfasern und flankierenden Schichten aus mikroporösen Folien besteht, wobei die bevorzugte Technik zum Auftragen des Klebstoffs das Schmelzblasen des Klebstoffs auf eine der zu verklebenden Oberflächen ist.

Derartige Verfahren und Materialien sind bekannt. Je nach Verwendungszweck und Weiterverarbeitung ist es notwendig, eine weitere Schicht aus einem Kleber auf das Mehrschichtmaterial aufzubringen.

Nachteilig bei den bekannten Verfahren ist es, dass es jedoch sehr aufwendig ist, die je nach Verwendungszweck des Mehrschichtmaterials benötigte Schicht aus einem Kleber auf das Mehrschichtmaterial aufzubringen, da somit mehrere Verfahrensschritte und Fertigungsschritte erforderlich sind.

Die Aufgabe der Erfindung ist es, ein Verfahren zur Herstellung eines Mehrschichtmaterials und ein Mehrschichtmaterial anzugeben, mit denen die genannten Nachteile überwunden werden können.

Diese Aufgabe wird erfindungsgemäß durch ein Verfahren gemäß Anspruch 1 und das Mehrschichtmaterial gemäß Anspruch 8 gelöst. Vorteilhafte Weiterbildungen der Erfindung sind in den jeweiligen abhängigen Ansprüchen angegeben.

Besonders vorteilhaft bei dem Verfahren zur Herstellung eines Verfahren zur Herstellung eines Mehrschichtmaterials mit zumindest zwei Schichten, die nacheinander jeweils mittels zumindest eines Düsenblocks nach dem Schmelzblasverfahren kontinuierlich hergestellt werden, indem mittels eines ersten Düsenblocks eine erste Schicht aus einem Schmelzblasvlies hergestellt und mittels einer Fördereinrichtung kontinuierlich abtransportiert wird, wobei die zweite Schicht mittels zumindest eines in Transportrichtung der Fördereinrichtung hinter dem ersten Düsenblock angeordneten zweiten Düsenblocks nach dem Schmelzblasverfahren unmittelbar auf die erste Schicht aufgebracht wird, ist es, dass die zweite Schicht aus einem Schmelzkleber gebildet ist.

Mit einem Schmelzblasvlies ist dabei ein Vlies bezeichnet, welches durch das Schmelzblasverfahren hergestellt wurde. Bei der Fördereinrichtung kann es sich insbesondere um ein Förderband oder um eine Walze handeln.

Durch das erfindungsgemäße Verfahren wird es ermöglicht, in einem einzigen Herstellungsverfahren und einem einzigen Herstellungsprozess durch die Nutzung zweier nacheinander angeordneter Düsenblöcke unter Anwendung des Schmelzblasverfahrens ein Mehrschichtmaterial herzustellen, welches eine erste Schicht aus einem Schmelzblasvlies aufweist sowie eine unmittelbar auf diese erste Schicht aufgebrachte zweite Schicht aus einem Schmelzkleber, die ebenfalls nach dem Schmelzblasverfahren mittels eines zweiten Düsenblockes hergestellt wird.

Besonders vorteilhaft bei dem Mehrschichtmaterial, welches durch das erfindungsgemäße Verfahren hergestellt wurde, ist es, dass das Mehrschichtmaterial eine zweite Schicht aus Schmelzkleber aufweist, welche eine optimierte Haftung sowohl mit der ersten Schicht als auch mit einem zu verklebenden Material ermöglicht. Diese Ausgestaltung gestattet die sofortige Weiterberarbeitung des Mehrschichtmaterials, ohne dass es erforderlich ist, in einem weiteren Arbeitsschritt eine Schicht eines Klebers aufzubringen.

Zum Einsatz kommt somit eine Anlage mit zumindest zwei in Transportrichtung der Fördereinrichtung hintereinander angeordneten Düsenblöcken, wobei zwei verschiedene Materialien, nämlich ein Vliesmaterial und ein Schmelzkleber, durch den ersten Düsenblock und den in Transportrichtung nachfolgenden zweiten Düsenblock nach dem Schmelzblasverfahren versponnen werden.

Das Verkleben des erfindungsgemäßen Mehrschichtmaterials kann insbesondere mittels eines kurzen Erhitzens der zweiten Schicht und eines Andrückens des Mehrschichtmaterials an eine zu verklebende Oberfläche erfolgen.

Bei der Fördereinrichtung kann es sich insbesondere um Förderband und insbesondere um ein Siebband handeln. Durch eine Ausbildung des Förderbandes als Siebband kann eine geringere Haftung des Mehrschichtmaterials an das Förderband erreicht werden. Ferner kann das Mehrschichtmaterial während des Transports durch das Siebband insbesondere mittels eines Luftstroms und/oder Dampfstroms gekühlt und/oder beheizt werden.

Vorzugsweise ist die erste Schicht aus einem Polymer gebildet. Besonders bevorzugt wird zur Herstellung der ersten Schicht ein Polymer, insbesondere Polyurethan oder Polyolefin oder Polypropylen, als Rohmaterial in einem Extruder geschmolzen und durch den ersten Düsenblock gepresst, insbesondere mittels einer ersten Spinnpumpe durch den ersten Düsenblock gepresst.

Insbesondere kann es sich bei dem Rohmaterial der ersten Schicht ferner um Polybutylenterephtalat oder Polycarbonat oder Polyphenylensulfid handeln.

Insbesondere kann eine Streckung von Fasern nach dem Pressen der ersten Schicht durch den ersten Düsenblock im freien Fall entlang einer Fallstrecke und/oder in einem Heißluftstrom vor einer Ablage auf der Fasern der ersten Schicht auf dem Förderband erfolgen.

Spinnvlies oder Vlies ist ein textiles Flächengebilde aus einzelnen Fasern. Im Sinne der Erfindung werden die Begriffe Spinnvlies und Vlies synonym verwendet und es sind alle nichtgewebten Stoffe umfasst, die in der englischen Sprache als sogenannte "nonwoven" [nichtgewebt] bezeichnet werden. Ein Vlies besteht aus lose zusammenliegenden Fasern, welche nicht miteinander verbunden sind. Die Festigkeit eines Vlieses beruht nur auf der fasereigenen Haftung, kann aber durch Aufarbeitung beeinflusst werden. Um dem Vlies besondere Festigkeitseigenschaften zu verleihen, kann es weiter verfestigt werden, wofür verschiedene Methoden angewandt werden können, insbesondere das Kalandrieren.

Insbesondere kann eine Verfestigung von Fasern der ersten Schicht und/oder eine Prägung der ersten Schicht durch ein- oder mehrmaliges Kalandrieren zwischen zwei Kalanderwalzen erfolgen, bevor die zweite Schicht aufgebracht wird. Dabei können die Kalanderwalzen beheizt sein und die Fasern angeschmolzen werden, sodass das Schmelzblasvlies verfestigt wird und die gewünschten mechanischen Eigenschaften aufweist. Bei der Verfestigung durch einen Kalander ist vorzugsweise eine der beiden Walzen mit einer Gravur versehen. An den Kontaktpunkten verschmelzen die Fasern und bilden somit einen festen Vliesstoff, der die gewünschten mechanischen Eigenschaften aufweist.

In einer bevorzugten Ausführungsform wird in Transportrichtung der Fördereinrichtung vor dem ersten Düsenblock ein Trägermaterial der Fördereinrichtung kontinuierlich zugeführt wird, wobei die erste Schicht unmittelbar auf das Trägermaterial aufgebracht. Bei dem Trägermaterial kann es sich insbesondere um ein Vlies handeln, insbesondere um ein Vlies aus Stapelfasern oder um ein Spinnvlies, insbesondere um ein Schmelzblasvlies oder um ein mittels des Filamentspinnverfahrens hergestelltes Filamentspinnvlies handeln. Bei dem Trägermaterial kann es sich somit insbesondere um ein Nadelvlies handeln.

Unter einem Filamentspinnvlies ist ein Vlies gemeint, welches durch das Filamentspinnvliesverfahren hergestellt wurde. Das Filamentspinnvliesverfahren und das Schmelzblasverfahren, welches die in der englischen Sprache als Meltblown-Verfahren bezeichnet wird, sind dem Schmelzspinnverfahren oder Spinnvliesverfahren zuzuordnen.

Bei dem Schmelzspinnverfahren oder Spinnvliesverfahren wird ein Polymer in einem Extruder erhitzt und auf einen hohen Druck gebracht. Das Polymer wird in genauer Dosierung mittels zumindest einer Spinnpumpe durch den Düsenblock mit einer Mehrzahl von Spinndüsen gepresst. Das Polymer tritt aus den Austrittsöffnungen der Spinndüsen als feiner Faden noch in geschmolzener Form aus. Durch einen Luftstrom wird es abgekühlt und noch aus der Schmelze gestreckt. Der Luftstrom befördert die Fäden auf ein Förderband, das als Sieb ausgebildet sein kann. Durch eine Absaugung unter dem Siebband werden die Fäden fixiert. Dieses Faden- bzw. Fasergelege ist ein Wirrlagen-Vlies, das noch verfestigt werden kann. Die Verfestigung kann durch zwei beheizte Kalanderwalzen durch das sogenannte Kalandrieren oder durch einen Dampfstrom erfolgen.

Bei dem sogenannten Schmelzblasverfahren oder Meltblown-Verfahren wird zur Faserherstellung ebenfalls ein Polymer in einem Extruder erhitzt und auf einen hohen Druck gebracht. Das Polymer wird in genauer Dosierung mittels zumindest einer Pumpe durch den Düsenblock mit einer Mehrzahl von Spinndüsen gepresst. Nach dem Austritt durch die Austrittsöffnungen der Spinndüsen kann das Polymer durch komprimierte Prozess-Heißluft gestreckt, d.h. mittels eines Hochgeschwindigkeitsheißluftstromes gestreckt werden. Das entstehende Vlies kann dann auf einem Förderband, insbesondere auf einem luftdurchlässigen Siebband abgelegt werden. Ferner kann dabei eine Abrollstation vor und hinter dem Düsenblock angeordnet werden. Ein Kalander kann dabei die zugeführten Materialien, insbesondere die erste Schicht und die zweite Schicht verbinden.

Erfindungsgemäß wird beim Aufbringen der zweiten Schicht das beschriebene Schmelzblasverfahren oder Meltblown-Verfahren mit dem Unterschied genutzt, dass anstelle eines Polymers ein Kleber, insbesondere in fester Form, als Rohmaterial eingesetzt wird.

Insbesondere können die Filamentspinnvliese gegenüber den Schmelzblasvliesen eine höhere Festigkeit aufweisen. Charakteristisch für die Schmelzblasvliese gegenüber den Filamentspinnvlieses sind feinere Fasern mit größerer innerer Oberfläche, eine gute Flächendeckung sowie bessere Barriereeigenschaften.

Insbesondere kann es sich bei dem Mehrschichtmaterial um ein Isoliermaterial, insbesondere zur akustischen Isolierung handeln.

Bei der ersten Schicht des erfindungsgemäßen Mehrschichtmaterials handelt es sich somit um eine Schicht aus einem Schmelzblasvlies, welches mittels eines ersten Düsenblocks nach dem Schmelzblasverfahren hergestellt wurde. Diese Schicht kann wie erläutert mechanisch und/oder thermisch behandelt sein, beispielsweise mittels Kalandrierens, um dieser ersten Schicht die gewünschten mechanischen Eigenschaften und Festigkeit zu verleihen.

Die unmittelbar auf die erste Schicht aufgebrachte zweite Schicht ist aus einem Schmelzkleber gebildet und wird mittels eines zweiten Düsenblocks ebenfalls nach dem Schmelzblasverfahren hergestellt.

Eine optional zugeführte Trägerschicht kann insbesondere durch ein Schmelzblasvlies oder ein Filamentspinnvlies gebildet sein. Auch diese Trägerschicht kann wie erläutert mechanisch und/oder thermisch behandelt sein, beispielsweise mittels Kalandrierens, um dieser Trägerschicht die gewünschten mechanischen Eigenschaften und Festigkeit zu verleihen. Die erste Schicht wird mittels des ersten Düsenblocks unmittelbar auf diese kontinuierlich zugeführte Trägerschicht aufgebracht. Insbesondere ist es möglich, dieses Zwischenprodukt aus Trägerschicht und erster Schicht aus einem Schmelzblasvlies mechanisch und/oder thermisch zu behandeln, bevor die zweite Schicht aus dem Schmelzkleber unmittelbar auf die erste Schicht aufgebracht wird.

Vorzugsweise wird ein Schmelzkleber in fester oder in flüssiger Form als Rohmaterial für die zweite Schicht in einem Extruder geschmolzen und durch den zweiten Düsenblock gepresst wird, insbesondere mittels einer zweiten Spinnpumpe durch den zweiten Düsenblock gepresst wird.

Bevorzugt weist/weisen der erste Düsenblock und/oder der zweite Düsenblock jeweils eine Mehrzahl von Spinndüsen auf, insbesondere dass die Spinndüsen des ersten Düsenblocks und/oder des zweiten Düsenblocks unterschiedlich große Austrittsöffnungen aufweisen.

Es können sich somit die Durchmesser der Spinndüsen des ersten Düsenblocks und des zweiten Düsenblocks voneinander unterscheiden. Alternativ oder kumulativ kann der erste Düsenblock und/oder der zweite Düsenblock jeweils Spinndüsen unterschiedlicher Durchmesser aufweisen.

Der Faserdurchmesser kann durch die Größe der Austrittsöffnungen der Spinndüsen in dem verwendeten Düsenblock beeinflusst werden. Dickere Fasern bewirken dabei eine größere Trag- und Reisfestigkeit des Spinnvlieses.

Dabei können Spinndüsen mit kreisrunden Querschnitten mit unterschiedlichen Durchmessern verwendet werden.

Alternativ oder kumulativ können die Spinndüsen mit von einer kreisrunden Form abweichenden Austrittsöffnungen aufweisen.

Es können somit sowohl Düsen mit kreisrunden Austrittsöffnungen als auch Düsen mit Austrittsöffnungen, die von einer kreisrunden Form abweichen, zum Einsatz kommen, wie beispielsweise Düsen mit kreuzförmigen Austrittsöffnungen. Auch können Düsen mit unterschiedlichen Formen innerhalb eines Herstellungsvorganges, insbesondere innerhalb eines Düsenblocks kombiniert werden. Hierdurch besteht die Möglichkeit, Fasern unterschiedlicher Dicke und unterschiedlichen Querschnittsprofils zu erzeugen, um dem hergestellten Vlies die gewünschten Eigenschaften wie beispielsweise hohe Festigkeit zu verleihen.

Insbesondere können die Spinndüsen zumindest zwei verschieden große Austrittsöffnungen aufweisen.

Aufgrund der zumindest zwei verschieden großen Austrittsöffnungen der Spinndüsen des Düsenblocks werden zumindest zwei verschieden dicke Fasern erzeugt. Das hierdurch hergestellte Spinnvlies weist daher zumindest zwei verschiedene Faserstärken auf und kombiniert hierdurch verschiedene Vorteile in einer einzigen Lage eines Spinnvlieses.

Insbesondere können dabei die Austrittsöffnungen der Spinndüsen auf einer oder auf mehreren geraden Linien über die Breite des ersten Düsenblocks und/oder des ersten Düsenblocks angeordnet sein.

Dabei können die Austrittsöffnungen eines kleineren Querschnitts, insbesondere Durchmessers und Austrittsöffnungen eines größeren Querschnitts, insbesondere Durchmessers alternierend über die Breite des Düsenblocks angeordnet sein.

Dabei kann einer bestimmten Anzahl Spinndüsen mit Austrittsöffnungen eines kleineren Querschnitts, insbesondere Durchmessers, dieselbe oder eine andere Anzahl Spinndüsen mit Austrittsöffnungen eines größeren Querschnitts, insbesondere Durchmessers, entlang einer Linie oder entlang mehrerer Linien über die Breite des Düsenblocks folgen.

Dabei kann der Querschnitt der kleinsten Austrittsöffnungen der Spinndüsen im Bereich von 0,017 mm² bis zu 0,2 mm² liegen, insbesondere 0,1 mm² betragen.

Dabei können die Spinndüsen mit kreisrunder Austrittsöffnung einen Durchmesser der kleinsten Austrittsöffnungen der Spinndüsen im Bereich von 0,15 mm bis zu 0,5 mm, insbesondere im Bereich von 0,2 mm bis zu 0,35 mm aufweisen.

Dabei kann der Querschnitt der größten Austrittsöffnungen der Spinndüsen im Bereich von 0,03 mm² bis zu 0,5 mm² liegen, insbesondere 0,2 mm² betragen.

Dabei können die Spinndüsen mit kreisrunder Austrittsöffnung einen Durchmesser der größten Austrittsöffnungen der Spinndüsen im Bereich von 0,2 mm bis zu 0,8 mm, insbesondere im Bereich von 0,3 mm bis 0,51 mm aufweisen.

In einer bevorzugten Ausführungsform wird einem Rohmaterial für die erste Schicht und/oder einem Rohmaterial für die zweite Schicht zumindest ein Additiv beigemischt. Durch die Beimischung eines oder mehrerer Additive können den Fasern der ersten Schicht und/oder der zweiten Schicht zusätzliche chemische und/oder mechanische Eigenschaften gegeben werden. Die Beimischung kann dabei vor und/oder in einem dem jeweiligen Düsenblock vorgeschalteten Extruder erfolgen.

Bei dieser bevorzugten Ausführungsform werden dem Rohmaterial somit vor und/oder während des Extrudierens im Extruder Additive beigemischt. Hierdurch können dem Fasermaterial die gewünschten Eigenschaften verliehen werden. So können dem Rohmaterial solche Additive beigegeben werden, sodass die Fasern hydrophil oder hydrophob sind. Alternativ oder kumulativ können dem Rohmaterial solche Additive beigegeben werden, sodass die Fasern oleophil oder oleophob sind. Ferner können alternativ oder kumulativ Additive in Form von Aromastoffen beigegeben werden. Durch derartige Additive können dem Fasermaterial und damit dem Vlies gewünschte Materialeigenschaften verliehen werden. Alternativ oder kumulativ kann das Material einer Trägerschicht ein oder mehrere Additiv/e aufweisen.

Als Rohmaterial zur Faserherstellung können sowohl natürliche Polymere, wie beispielsweise Cellulose, oder auch synthetische Polymere, insbesondere Polyurethan, insbesondere Polyolefin, insbesondere Polypropylen, zum Einsatz kommen.

Besonders vorteilhaft bei dem Mehrschichtmaterial hergestellt nach dem erfindungsgemäßen Verfahren, insbesondere zur akustischen Isolierung, mit zumindest zwei Schichten, wobei die erste Schicht durch ein Schmelzblasvlies gebildet ist, ist es, dass die zweite Schicht aus einem Schmelzkleber gebildet ist.

Das Mehrschichtmaterial kann insbesondere als akustisches Isoliermaterial aufgrund der Kleberschicht unmittelbar weiterverarbeitet werden und mit anderen Materialien verbunden werden, insbesondere indem das Mehrschichtmaterial erhitzt und unter leichtem Druck aufgebracht wird.

Besonders vorteilhaft bei dem Mehrschichtmaterial, welches durch das erfindungsgemäße Verfahren hergestellt wurde, ist es, dass das Mehrschichtmaterial eine zweite Schicht aus Schmelzkleber aufweist, welche eine optimierte Haftung sowohl mit der ersten Schicht als auch mit einem zu verklebenden Material ermöglicht. Diese Ausgestaltung gestattet die sofortige Weiterberarbeitung des Mehrschichtmaterials, ohne dass es erforderlich ist, in einem weiteren Arbeitsschritt eine Schicht eines Klebers aufzubringen.

Bei der ersten Schicht des erfindungsgemäßen Mehrschichtmaterials handelt es sich somit um eine Schicht aus einem Schmelzblasvlies, welches mittels eines ersten Düsenblocks nach dem Schmelzblasverfahren hergestellt wurde. Diese Schicht kann wie erläutert mechanisch und/oder thermisch behandelt sein, beispielsweise mittels Kalandrierens, um dieser ersten Schicht die gewünschten mechanischen Eigenschaften und Festigkeit zu verleihen.

Die unmittelbar auf die erste Schicht aufgebrachte zweite Schicht ist aus einem Schmelzkleber gebildet und wird mittels eines zweiten Düsenblocks ebenfalls nach dem Schmelzblasverfahren hergestellt.

In einer bevorzugten Ausführungsform weist das Mehrschichtmaterial ein Trägermaterial auf, welches die erste Schicht trägt, insbesondere kann die Trägerschicht durch ein Vlies gebildet sein, insbesondere durch ein Vlies aus Stapelfasern oder durch ein Spinnvlies, insbesondere durch ein Schmelzblasvlies oder ein Filamentspinnvlies. Insbesondere kann es sich bei der Trägerschicht um ein Nadelvlies handeln. Diese Trägerschicht kann wie erläutert mechanisch und/oder thermisch behandelt sein, beispielsweise mittels Kalandrierens, um dieser Trägerschicht die gewünschten mechanischen Eigenschaften und Festigkeit zu verleihen

Erfindungsgemäß ist die erste Schicht und/oder eine Trägerschicht und/oder ein Verbund aus einer Trägerschicht und der ersten Schicht mittels ein- oder mehrmaligen Kalandrierens verfestigt. Hierdurch können der ersten Schicht und/oder einer Trägerschicht und/oder einem Verbund aus erster Schicht und einer Trägerschicht die gewünschten mechanischen Eigenschaften und Festigkeit verliehen werden.

Vorzugsweise weisen die Fasern der ersten Schicht und/oder die Fasern der zweiten Schicht und/oder Fasern einer Trägerschicht zumindest ein Additiv auf. Es können somit eine der Schichten oder mehrere der Schichten jeweils eines oder mehrere Additive aufweisen.

Bei dieser bevorzugten Ausführungsform werden dem Rohmaterial somit vor und/oder während des Extrudierens im Extruder Additive beigemischt. Hierdurch können dem Fasermaterial die gewünschten Eigenschaften verliehen werden. So können dem Rohmaterial solche Additive beigegeben werden, sodass die Fasern hydrophil oder hydrophob sind. Alternativ oder kumulativ können dem Rohmaterial solche Additive beigegeben werden, sodass die Fasern oleophil oder oleophob sind. Ferner können alternativ oder kumulativ Additive in Form von Aromastoffen beigegeben werden. Durch derartige Additive können dem Fasermaterial und damit dem Vlies gewünschte Materialeigenschaften verliehen werden. Alternativ oder kumulativ kann das Material einer Trägerschicht ein oder mehrere Additive aufweisen.

Alternativ oder kumulativ können die Fasern der ersten Schicht und/oder die Fasern der zweiten Schicht und/oder Fasern einer Trägerschicht mit einer an der Faseroberfläche anhaftenden Beschichtung versehen sein. Hierdurch können dem Fasermaterial weitere gewünschte Eigenschaften verliehen werden.

Vorzugsweise weisen Fasern der ersten Schicht und/oder Fasern der zweiten Schicht Fasern zumindest zwei unterschiedliche Querschnitte, insbesondere Durchmesser, auf. Es können sich somit der Durchmesser der Fasern der ersten Schicht von dem Durchmesser der Fasern der zweiten Schicht unterscheiden. Alternativ oder kumulativ kann auch jede einzelne Schicht Fasern unterschiedlicher Stärke aufweisen. Hierdurch werden die Vorteile dickerer Fasern und die Vorteile dünnerer Fasern von Spinnvliesen innerhalb eines einzelnen, einlagigen Spinnvlieses vereinigt.

Der Faserdurchmesser kann durch die Größe der Austrittsöffnungen der Spinndüsen in dem verwendeten Düsenblock beeinflusst werden. Dickere Fasern bewirken dabei eine größere Trag- und Reisfestigkeit des Spinnvlieses.

Dabei können Spinndüsen mit kreisrunden Querschnitten mit unterschiedlichen Durchmessern verwendet werden. Alternativ oder kumulativ können die Spinndüsen mit von einer kreisrunden Form abweichenden Austrittsöffnungen aufweisen, resultierend in einem dementsprechenden Querschnitt der Fasern.

Es können somit sowohl Düsen mit kreisrunden Austrittsöffnungen als auch Düsen mit Austrittsöffnungen, die von einer kreisrunden Form abweichen, zum Einsatz kommen, wie beispielsweise Düsen mit kreuzförmigen Austrittsöffnungen. Auch können Düsen mit unterschiedlichen Formen innerhalb eines Herstellungsvorganges, insbesondere innerhalb eines Düsenblocks kombiniert werden. Hierdurch besteht die Möglichkeit, Fasern unterschiedlicher Dicke und unterschiedlichen Querschnittsprofils zu erzeugen, um dem hergestellten Vlies die gewünschten Eigenschaften wie beispielsweise hohe Festigkeit zu verleihen.

Insbesondere können die Spinndüsen zumindest zwei verschieden große Austrittsöffnungen aufweisen. Aufgrund der zumindest zwei verschieden großen Austrittsöffnungen der Spinndüsen des Düsenblocks werden zumindest zwei verschieden dicke Fasern erzeugt. Das hierdurch hergestellte Spinnvlies weist daher zumindest zwei verschiedene Faserstärken auf und kombiniert hierdurch verschiedene Vorteile in einer einzigen Lage eines Spinnvlieses.

Bevorzugt ist die erste Schicht aus einem Polymer, insbesondere Polyurethan, insbesondere Polyolefin, insbesondere Polypropylen, gebildet. Insbesondere kann es sich dabei um Polybutylenterephtalat oder Polycarbonat oder Polyphenylensulfid handeln.

Ein Ausführungsbeispiel der Erfindung ist in der Figur dargestellt und wird nachfolgend erläutert. Es zeigt:

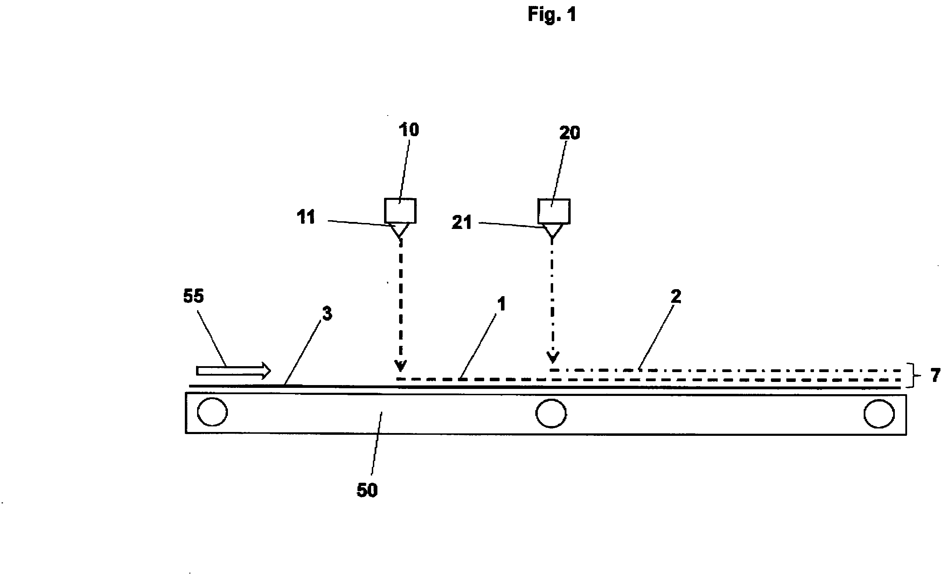

- Fig. 1: eine schematische Ansicht einer Vorrichtung zur Ausführung des Verfahrens zur Herstellung eines Mehrschichtmaterials.

Die Figur ist nicht maßstabsgerecht dargestellt, sondern rein schematisch.

Fig. 1 zeigt eine schematische Ansicht einer Vorrichtung zur Ausführung des Verfahrens zur Herstellung eines Mehrschichtmaterials 7. Im ersten Schritt wird ein Filamentspinnvlies als Trägerschicht 3 dem als Siebband ausgebildeten Förderband 50 zugeführt und mittels dessen in Richtung des ersten Düsenblocks 10 transportiert. Die Transportrichtung des Förderbandes 50 ist gekennzeichnet durch den Pfeil 55.

Der erste Düsenblock 10 weist mehrere über seine Breite verteilte Spinndüsen 11 mit unterschiedlich großen Austrittsöffnungen auf. Die Breite des ersten Düsenblockes 10 erstreckt sich in die Bildebene hinein. Mittels eines dem ersten Düsenblock 10 vorgeschalteten und nicht dargestellten Extruders wird ein Polymer aufgeschmolzen und mittels einer nicht dargestellten ersten Pumpe durch den ersten Düsenblock 10 gepresst. Die durchgepressten Fasern legen sich auf der zulaufenden Trägerschicht 3 als erste Schicht 1 in Form eines Schmelzblasvlieses ab. Die erste Schicht 1 wird somit im Schmelzblasverfahren unmittelbar auf die Trägerschicht 3 aufgebracht.

Sodann werden die Trägerschicht 3 mit der ersten Schicht 1 in Transportrichtung 55, d.h. in Richtung des zweiten Düsenblocks 20 transportiert. Der zweite Düsenblock 20 weist mehrere über seine Breite verteilte Düsen 21 auf. Die Breite des zweiten Düsenblockes 20 erstreckt sich in die Bildebene hinein.

Mittels eines dem zweiten Düsenblock 20 vorgeschalteten und nicht dargestellten zweiten Extruders wird ein Schmelzkleber in fester Form aufgeschmolzen und mittels einer nicht dargestellten zweiten Pumpe durch den zweiten Düsenblock 20 gepresst. Der durchgepresste Schmelzkleber legt sich unmittelbar auf der ersten Schicht 1 als zweite Schicht 2 ab. Das Mehrschichtmaterial 7 aus der Trägerschicht 3 und den weiteren Schichten 1, 2 wird weiter transportiert und kann im Folgenden weiteren Verfahrensschritten unterzogen werden.

Auf diese Weise kann das Mehrschichtmaterial 7 einfach und schnell hergestellt werden, wobei die so aufgebrachte zweite Schicht 2 eine optimierte Haftung sowohl mit der ersten Schicht 1 als auch mit einem zu verklebenden Material ermöglicht. Das Verkleben des Mehrschichtmaterials 7 kann insbesondere mittels eines kurzen Erhitzens der zweiten Schicht 2 und eines Andrückens des Mehrschichtmaterials 7 an eine zu verklebende Oberfläche erfolgen.

## Patentansprüche

1. Verfahren zur Herstellung eines Mehrschichtmaterials mit zumindest zwei Schichten, die nacheinander jeweils mittels zumindest eines Düsenblocks nach dem Schmelzblasverfahren kontinuierlich hergestellt werden, indem mittels eines ersten Düsenblocks eine erste Schicht aus einem Schmelzblasvlies hergestellt und mittels einer Fördereinrichtung kontinuierlich abtransportiert wird, wobei die zweite Schicht mittels zumindest eines in Transportrichtung der Fördereinrichtung hinter dem ersten Düsenblock angeordneten zweiten Düsenblocks nach dem Schmelzblasverfahren unmittelbar auf die erste Schicht aufgebracht wird, **dadurch gekennzeichnet, dass** die zweite Schicht aus einem Schmelzkleber gebildet ist.

2. Verfahren nach Anspruch 1, **dadurch gekennzeichnet, dass** die erste Schicht aus einem Polymer gebildet ist.

3. Verfahren nach Anspruch 1 oder 2, **dadurch gekennzeichnet, dass** zur Herstellung der ersten Schicht ein Polymer, insbesondere Polyurethan oder Polyolefin oder Polypropylen, als Rohmaterial in einem Extruder geschmolzen und durch den ersten Düsenblock gepresst wird, insbesondere mittels einer ersten Spinnpumpe durch den ersten Düsenblock gepresst wird.

4. Verfahren nach einem der vorherigen Ansprüche, **dadurch gekennzeichnet, dass** in Transportrichtung der Fördereinrichtung vor dem ersten Düsenblock ein Trägermaterial der Fördereinrichtung kontinuierlich zugeführt wird, wobei die erste Schicht unmittelbar auf das Trägermaterial aufgebracht wird, insbesondere dass es sich bei dem Trägermaterial um ein Vlies handelt, insbesondere um ein Vlies aus Stapelfasern oder um ein Spinnvlies, insbesondere um ein Schmelzblasvlies oder um ein mittels des Filamentspinnverfahrens hergestelltes Filamentspinnvlies.

5. Verfahren nach einem der vorherigen Ansprüche, **dadurch gekennzeichnet, dass** ein Schmelzkleber in fester oder in flüssiger Form als Rohmaterial für die zweite Schicht in einem Extruder geschmolzen und durch den zweiten Düsenblock gepresst wird, insbesondere mittels einer zweiten Spinnpumpe durch den zweiten Düsenblock gepresst wird.

6. Verfahren nach einem der vorherigen Ansprüche, **dadurch gekennzeichnet, dass** der erste Düsenblock und/oder der zweite Düsenblock eine Mehrzahl von Spinndüsen aufweist, insbesondere dass die Spinndüsen des ersten Düsenblocks und/oder des zweiten Düsenblocks unterschiedlich große Austrittsöffnungen aufweisen.

7. Verfahren nach einem der vorherigen Ansprüche, **dadurch gekennzeichnet, dass** einem Rohmaterial für die erste Schicht und oder einem Rohmaterial für die zweite Schicht zumindest ein Additiv beigemischt wird.

8. Mehrschichtmaterial hergestellt nach dem Verfahren nach einem der vorherigen Ansprüche, insbesondere zur akustischen Isolierung, mit zumindest zwei Schichten, wobei die erste Schicht durch ein Schmelzblasvlies gebildet ist und wobei die zweite Schicht aus einem Schmelzkleber gebildet ist, **dadurch gekennzeichnet, dass** die erste Schicht und/oder eine Trägerschicht und/oder ein Verbund aus einer Trägerschicht und der ersten Schicht mittels ein- oder mehrmaligem Kalandrieren verfestigt wurde.

9. Mehrschichtmaterial nach Anspruch 8, **dadurch gekennzeichnet, dass** das Mehrschichtmaterial ein Trägermaterial aufweist, welches die erste Schicht trägt, insbesondere dass die Trägerschicht durch ein Vlies gebildet ist, insbesondere durch ein Vlies aus Stapelfasern oder durch ein Spinnvlies, insbesondere durch ein Schmelzblasvlies oder ein Filamentspinnvlies.

10. Mehrschichtmaterial nach einem der Ansprüche 8 bis 9, **dadurch gekennzeichnet, dass** Fasern der ersten Schicht und/oder Fasern der zweiten Schicht und/oder Fasern einer Trägerschicht zumindest ein Additiv aufweist/aufweisen.

11. Mehrschichtmaterial nach einem der Ansprüche 8 bis 10, **dadurch gekennzeichnet, dass** Fasern der ersten Schicht und/oder Fasern der zweiten Schicht Fasern zumindest zwei unterschiedliche Querschnitte, insbesondere Durchmesser aufweisen.

12. Mehrschichtmaterial nach einem der Ansprüche 8 bis 11, **dadurch gekennzeichnet, dass** die erste Schicht aus einem Polymer, insbesondere Polyurethan, insbesondere Polyolefin, insbesondere Polypropylen, gebildet ist.

## Claims

1. A method for producing a multilayer material having at least two layers, which are produced continuously one after the other in each case by means of at least one nozzle block using the meltblown process, wherein a first layer made of a meltblown nonwoven is produced by means of a first nozzle block and is continuously conveyed away by means of a conveyor device, and wherein the second layer is applied directly onto the first layer by means of at least one second nozzle block arranged downstream of the first nozzle block in the transport direction of the conveyor device using the meltblown process, **characterized in that** the second layer is formed from a hot-melt adhesive.

2. The method according to claim 1, **characterized in that** the first layer is formed from a polymer.

3. The method according to claim 1 or 2, **characterized in that**, for producing the first layer, a polymer, in particular polyurethane or polyolefin or polypropylene, is melted as a raw material in an extruder and pressed through the first nozzle block, in particular pressed through the first nozzle block by means of a first spinning pump.

4. The method according to one of the preceding claims, **characterized in that**, in the transport direction of the conveyor device upstream of the first nozzle block, a carrier material is continuously supplied to the conveyor device, wherein the first layer is applied directly onto the carrier material, in particular wherein the carrier material is a nonwoven, in particular a staple fiber nonwoven or a spunbond nonwoven, in particular a meltblown nonwoven or a filament-spun nonwoven produced by the filament spinning process.

5. The method according to one of the preceding claims, **characterized in that** a hot-melt adhesive in solid or liquid form is melted as a raw material for the second layer in an extruder and pressed through the second nozzle block, in particular pressed through the second nozzle block by means of a second spinning pump.

6. The method according to one of the preceding claims, **characterized in that** the first nozzle block and/or the second nozzle block comprises a plurality of spinneret nozzles, in particular wherein the spinneret nozzles of the first and/or the second nozzle block have different large outlet openings.

7. The method according to one of the preceding claims, **characterized in that** at least one additive is admixed to a raw material for the first layer and/or to a raw material for the second layer.

8. A multilayer material produced according to the method according to one of the preceding claims, in particular for acoustic insulation, having at least two layers, wherein the first layer is formed by a meltblown nonwoven and wherein the second layer is formed from a hot-melt adhesive, **characterized in that** the first layer and/or a carrier layer and/or a composite of a carrier layer and the first layer has been consolidated by single or multiple calendering.

9. The multilayer material according to claim 8, **characterized in that** the multilayer material comprises a carrier material which supports the first layer, in particular wherein the carrier layer is formed by a nonwoven, in particular by a staple fiber nonwoven or by a spunbond nonwoven, in particular by a meltblown nonwoven or a filament-spun nonwoven.

10. The multilayer material according to one of claims 8 to 9, **characterized in that** fibers of the first layer and/or fibers of the second layer and/or fibers of a carrier layer comprise at least one additive.

11. The multilayer material according to one of claims 8 to 10, **characterized in that** fibers of the first layer and/or fibers of the second layer have at least two different cross-sections, in particular diameters.

12. The multilayer material according to one of claims 8 to 11, **characterized in that** the first layer is formed from a polymer, in particular polyurethane, in particular polyolefin, in particular polypropylene.

## Revendications

1. Procédé de fabrication d'un matériau multicouche comprenant au moins deux couches, lesquelles sont fabriquées en continu l'une après l'autre respectivement au moyen d'au moins un bloc de filières selon le procédé meltblown, dans lequel une première couche sous forme d'un non-tissé meltblown est fabriquée au moyen d'un premier bloc de filières et est évacuée en continu au moyen d'un dispositif de convoyage, la deuxième couche étant appliquée directement sur la première couche au moyen d'au moins un deuxième bloc de filières disposé en aval du premier bloc de filières dans le sens de transport du dispositif de convoyage selon le procédé meltblown, **caractérisé en ce que** la deuxième couche est formée à partir d'un adhésif thermofusible.

2. Procédé selon la revendication 1, **caractérisé en ce que** la première couche est formée à partir d'un polymère.

3. Procédé selon la revendication 1 ou 2, **caractérisé en ce que**, pour la fabrication de la première couche, un polymère, notamment du polyuréthane ou de la polyoléfine ou du polypropylène, est fondu en tant que matière première dans une extrudeuse et est pressé à travers le premier bloc de filières, notamment pressé à travers le premier bloc de filières au moyen d'une première pompe de filage.

4. Procédé selon l'une quelconque des revendications précédentes, **caractérisé en ce que**, dans le sens de transport du dispositif de convoyage en amont du premier bloc de filières, un matériau support est alimenté en continu au dispositif de convoyage, la première couche étant appliquée directement sur le matériau support, notamment **en ce que** le matériau support est un non-tissé, notamment un non-tissé de fibres discontinues ou un non-tissé filé-lié, notamment un non-tissé meltblown ou un non-tissé filé de filaments fabriqué selon le procédé de filage de filaments.

5. Procédé selon l'une quelconque des revendications précédentes, **caractérisé en ce qu'**un adhésif thermofusible à l'état solide ou liquide est fondu en tant que matière première pour la deuxième couche dans une extrudeuse et est pressé à travers le deuxième bloc de filières, notamment pressé à travers le deuxième bloc de filières au moyen d'une deuxième pompe de filage.

6. Procédé selon l'une quelconque des revendications précédentes, **caractérisé en ce que** le premier bloc de filières et/ou le deuxième bloc de filières comprend une pluralité de filières de filage, notamment **en ce que** les filières de filage du premier et/ou du deuxième bloc de filières présentent des ouvertures de sortie de tailles différentes.

7. Procédé selon l'une quelconque des revendications précédentes, **caractérisé en ce qu'**au moins un additif est mélangé à une matière première pour la première couche et/ou à une matière première pour la deuxième couche.

8. Matériau multicouche fabriqué selon le procédé selon l'une quelconque des revendications précédentes, notamment destiné à l'isolation acoustique, comprenant au moins deux couches, la première couche étant formée par un non-tissé meltblown et la deuxième couche étant formée à partir d'un adhésif thermofusible, **caractérisé en ce que** la première couche et/ou une couche support et/ou un composite d'une couche support et de la première couche a été consolidé par un ou plusieurs calandrage(s).

9. Matériau multicouche selon la revendication 8, **caractérisé en ce que** le matériau multicouche comprend un matériau support portant la première couche, notamment **en ce que** la couche support est formée par un non-tissé, notamment par un non-tissé de fibres discontinues ou par un non-tissé filé-lié, notamment par un non-tissé meltblown ou un non-tissé filé de filaments.

10. Matériau multicouche selon l'une quelconque des revendications 8 à 9, **caractérisé en ce que** des fibres de la première couche et/ou des fibres de la deuxième couche et/ou des fibres d'une couche support comprennent au moins un additif.

11. Matériau multicouche selon l'une quelconque des revendications 8 à 10, **caractérisé en ce que** des fibres de la première couche et/ou des fibres de la deuxième couche présentent au moins deux sections transversales différentes, notamment des diamètres différents.

12. Matériau multicouche selon l'une quelconque des revendications 8 à 11, **caractérisé en ce que** la première couche est formée à partir d'un polymère, notamment du polyuréthane, notamment de la polyoléfine, notamment du polypropylène.
